# EUROPÄISCHE PATENTSCHRIFT

(11) **EP 2 990 823 B1**
(45) Veröffentlichungstag und Bekanntmachung des Hinweises auf die Patenterteilung: **18.12.2019**
(21) Anmeldenummer: 15001561.8
(22) Anmeldetag: 22.05.2015
(51) Int. Cl.: G01S 13/93, H01Q 3/14

(54) **RADARSENSOR, INSBESONDERE FÜR EIN KRAFTFAHRZEUG, UND KRAFTFAHRZEUG**
RADAR SENSOR, IN PARTICULAR FOR A MOTOR VEHICLE, AND MOTOR VEHICLE
CAPTEUR RADAR, EN PARTICULIER POUR UN VÉHICULE AUTOMOBILE ET VÉHICULE AUTOMOBILE

(30) Priorität: 29.08.2014 DE 102014013003
(43) Veröffentlichungstag der Anmeldung: 02.03.2016
(73) Patentinhaber: AUDI AG, 85045 Ingolstadt (DE)
(72) Erfinder: Khlifi, Rachid, 85748 Garching (DE)
(74) Vertreter: Thielmann, Frank

(56) Entgegenhaltungen:
- EP-A2- 1 220 353
- DE-A1- 10 059 891
- DE-A1- 10 235 337
- DE-A1-102007 027 975
- DE-T2- 69 806 276
- JP-A- 2006 105 866
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft einen Radarsensor, insbesondere für ein Kraftfahrzeug, aufweisend einen auf einer Leiterplatte angeordneten, wenigstens einen Radar-Transceiver realisierenden CMOS-Chip, eine Antennenanordnung und ein Radom. Daneben betrifft die Erfindung ein Kraftfahrzeug mit einem solchen Radarsensor.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Das Dokument JP 2006 105866 A offenbart ein Kraftfahrzeug mit einem Radarsensor und einer verschiebbaren Linse.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Gezeigt hat sich, dass eine vom Aufwand her realisierbare Hochintegration, insbesondere also die Realisierung einer Antenne im Package mit einem Radarchip, der die sonstigen Komponenten des Radar-Frontends enthält, erst mit der Verfügbarkeit der CMOS-Technologie tatsächlich gegeben ist.

Bei heute bekannten Radarsensoren spielt das Radom eine wichtige Rolle. Mit dem Wort Radom (kurz für "radar dome") wird üblicherweise die Abdeckung bezeichnet, die die Antennenanordnung des Radarsensors vor äußeren mechanischen und chemischen Einflüssen, beispielsweise vor Wind oder Regen, schützt. Das Radom ist dabei üblicherweise für Radarwellen durchlässig gestaltet, besteht mithin aus einem geeigneten Hochfrequenzmaterial (HF-Material). Durch die Form des Radoms können Detektionseigenschaften des Radarsensors beeinflusst werden, insbesondere der Öffnungswinkel des Erfassungsbereichs und die Reichweite des Radarsensors. Wird beispielsweise ein komplett flaches Radom verwendet, ergibt sich ein großer Öffnungswinkel, jedoch eine reduzierte Reichweite, da durch die zwei auftretenden Grenzflächen keine tatsächliche Beeinflussung des Radarsignals auftritt. Wird jedoch beispielsweise ein halbkugelförmig ausgewölbtes Radom verwendet, ergibt sich durch die gekrümmte äußere Grenzfläche ein Linseneffekt, der zwar den Öffnungswinkel reduziert, jedoch die Reichweite erhöht, da die Radarstrahlung auf einen kleineren Bereich fokussiert wird.

Je nach der Anwendung, für die der Radarsensor geschaffen ist, wird er entweder mit einem flachen oder mit einem halbkugelförmigen Radom betrieben, das dem entsprechenden Radar-Frontend zugeordnet ist. Mithin wird der Fokus bezüglich eines Radarsensors entweder auf eine größere Reichweite oder auf einen größeren Öffnungswinkel gelegt. Häufig besteht jedoch der Wunsch, ausgehend von dem selben Ort Radardaten sowohl mit größerem Öffnungswinkel als auch mit größerer Reichweite zu erhalten. Dies ist bei den heute vorgegebenen Radoms nicht möglich.

Der Erfindung liegt daher die Aufgabe zugrunde, einen Radarsensor anzugeben, der auf einfache Art und Weise unterschiedliche Detektionseigenschaften umsetzt.

Zur Lösung dieser Aufgabe ist bei einem Radarsensor der eingangs genannten Art erfindungsgemäß vorgesehen, dass das insbesondere einstückige Radom wenigstens zwei unterschiedlich wirkende Radaroptikabschnitte aufweist und eine Bewegungseinrichtung zur Bewegung des Radoms in den einzelnen Radaroptikabschnitten zugeordnete Moduspositionen, in denen die Antennenanordnung durch den jeweiligen Radaroptikabschnitt ausstrahlt, vorgesehen ist.

In den Moduspositionen überdeckt mithin der Radaroptikabschnitt die Antennenanordnung in Ausstrahlungsrichtung, so dass sich die durch den Radaroptikabschnitt definierten Ausstrahlungseigenschaften ergeben. Erfindungsgemäß wird also vorgeschlagen, die durch die CMOS-Technologie mögliche Hochintegration zu nutzen, insbesondere also die Existenz von Packages, die die Antennenanordnung und einen wenigstens den Radar-Transceiver realisierenden CMOS-Chip enthalten und auf einer Leiterplatte realisiert werden können, um einen kleinbauenden Radarsensor zu schaffen, der es ermöglicht, ihn ohne zu großen baulichen Aufwand und Kostenaufwand mit einem beweglichen Radom zu versehen. Das Radom weist Radaroptikabschnitte auf, die unterschiedliche Detektionseigenschaften für den Radarsensor definieren können, wobei bevorzugt zwei Radaroptikabschnitte vorgesehen sind, aber auch mehr als zwei Radaroptikabschnitte denkbar sind. Bevorzugt ist wenigstens der die Radaroptikabschnitte enthaltende Anteil des Radoms einstückig hergestellt, was bei der geringen benötigten Größe problemlos möglich ist.

Mithin ist ein bewegbares, insbesondere verschiebbares, multifunktionales Radom als Teil des Gehäuses des Radarsensors vorhanden, so dass der Radarsensor, ohne dass an seinem sonstigen Betrieb etwas zu verändern wäre, mit unterschiedlichen Detektionseigenschaften, die durch die Radaroptikabschnitte definiert werden, betrieben werden kann. Je nachdem, in welcher Modusposition sich das Radom befindet, stehen für den Radarsensor mithin unterschiedliche Betriebsmodi zur Verfügung, um den Öffnungswinkel und die Reichweite des Sensors anzupassen, ohne dass das eigentliche Radar-Frontend bzw. die Antennenanordnung verändert werden muss. Beispielsweise kann das Radom einen Radaroptikabschnitt für die Erfassung im fernen Bereich und einen Radaroptikabschnitt für die Erfassung im nahen Bereich aufweisen, wobei auch andere Ausgestaltungen denkbar sind.

Vorzugsweise ist das Radom bzw. wenigstens der die Radaroptikabschnitte realisierender Anteil dabei massiv, das bedeutet, es besteht durchgehend aus einem für Radarstrahlung durchlässigen Material, so dass die unterschiedlichen Detektionseigenschaften durch die Grenzflächen des Radoms realisiert werden. Grundsätzlich ist es für komplexere Radaroptikabschnitte jedoch auch denkbar, eine größere Anzahl von Grenzflächen durch eine hohle Ausbildung des Radoms zu realisieren, was jedoch hinsichtlich der Herstellung weniger bevorzugt ist.

Eine konkrete Ausgestaltung der vorliegenden Erfindung sieht vor, dass das Radom wenigstens einen flachen Radaroptikabschnitt und wenigstens einen nach außen ausgewölbten, eine Linsenwirkung auf die Radarstrahlung ausübenden Radaroptikabschnitt aufweist. Dabei kann die Wölbung des gewölbten Radaroptikabschnitts insbesondere halbkugelförmig sein. Weist das Radom zwei Radaroptikabschnitte auf, sind mithin auch zwei Moduspositionen vorgesehen, kann das Radom in dem ersten Radaroptikabschnitt mit der Auswölbung einen Linseneffekt ausüben, mithin den Öffnungswinkel des Erfassungsbereichs reduzieren, jedoch die Reichweite steigern. Für die andere Modusposition kann ein Radaroptikabschnitt geschaffen werden, der flach ist und somit einen größeren Öffnungswinkel und eine reduzierte Reichweite realisiert. Die hier genannten Radaroptikabschnitte sind selbstverständlich beispielhaft zu verstehen, es sind grundsätzlich auch andere Formen, beispielsweise nach innen gewölbte Oberflächen, denkbar.

Zweckmäßigerweise kann das Radom aus einem Hochfrequenzmaterial, insbesondere umfassend Polypropylen, bestehen. Wesentlich hierbei ist, dass das Hochfrequenzmaterial für Radarstrahlung möglichst durchlässig ist, mithin einen hohen Transmissionskoeffizienten aufweist. Als geeignetes Material hat sich Polypropylen bzw. eine Polypropylenmischung erwiesen, die auch für Stoßfänger von Kraftfahrzeugen häufig eingesetzt wird. In diesem Kontext ist es ferner zweckmäßig, wenn das Radom in einem Gussverfahren hergestellt ist. Das bevorzugt wenigstens im Anteil der Radaroptikabschnitte einstückige Radom, welches, wie dargestellt, bevorzugt ohnehin massiv ohne Hohlräume ist, kann durch Bereitstellung einer geeigneten Form in einem Gussverfahren auf einfache und kostengünstige Weise hergestellt werden.

Eine besonders zweckmäßige Ausgestaltung der vorliegenden Erfindung sieht vor, dass die Antennenanordnung in einem Package mit dem CMOS-Chip realisiert ist. Dann ist ein äußerst kleinbauender Radarsensor gegeben, der insbesondere auch kurze Signalwege realisiert und mithin Störeffekte durch längere Signalwege vermeidet. Es ergibt sich hierdurch ein hervorragendes Signal-zu-Rausch-Verhältnis. Insbesondere jedoch können dann auch die Radaroptikabschnitte sowie das Radom an sich, welches zumindest im Anteil der Radaroptikabschnitte bewegbar ist, klein gehalten werden, was auch für die benötigte Mechanik der Bewegungseinrichtung gilt.

Die Hochintegration lässt sich weiter dadurch verbessern, dass durch den CMOS-Chip auch eine digitale Signalverarbeitungskomponente und/oder eine Steuereinheit des Radarsensors realisiert ist. Eine in einem CMOS-Chip realisierte digitale Signalverarbeitungskomponente (DSP) kann für eine Vorauswertung der Daten sorgen, welche dann über die Steuereinheit beispielsweise bereits aufbereitet als Objektliste weitergegeben werden können.

Zur konkreten Realisierung der Bewegungseinrichtung bzw. der Bewegbarkeit an sich sind verschiedene Ausgestaltungen denkbar. So sieht eine zweckmäßige Ausgestaltung vor, dass die Leiterplatte in einem in Ausstrahlungsrichtung offenen Gehäuseteil gehaltert ist, wobei das Radom in Ausstrahlungsrichtung auf dem Gehäuseteil verschiebbar und/oder rotierbar geführt ist, und/oder die Bewegungseinrichtung einen Motor, insbesondere einen Linearmotor, aufweist. Es kann mithin eine Führungseinrichtung vorgesehen sein, die das Radom oder zumindest den die Radaroptikabschnitte enthaltenen Anteil des Radoms entlang einer Verschieberichtung bzw. um eine Achse rotierbar oberhalb der Antennenanordnung in Ausstrahlungsrichtung führt. In einer einfachen Ausgestaltung kann, wenn genügend Bauraum um den Radarsensor zur Verfügung steht, eine lineare Verschiebbarkeit in einer Verschiebungsrichtung gegeben sein, wobei dann in jeder Modusposition das Radom das andere Gehäuseteil in Verschieberichtung etwa um die Verschiebelänge zwischen den Moduspositionen überragt. Diese Ausgestaltung wird bevorzugt bei einem einstückig hergestellten Radom eingesetzt und bietet den Vorteil, dass das Innere des durch das Radom abgeschlossenen Gehäuses immer vollständig nach außen abgeschlossen ist.

Es sind jedoch auch Ausgestaltungen denkbar, in denen ein solches Überragen des Radoms über das restliche Gehäuse aus Bauraumgründen vermieden werden soll, wobei in einem solchen Fall beispielsweise vorgesehen sein kann, dass das Radom in Verschieberichtung kürzer als das Gehäuse ausgebildet ist oder einen kürzer als das Gehäuse ausgeführten starren Anteil aufweist, und seitlich durch wenigstens ein flexibles, geführtes Element gehaltert ist. Dabei kann das flexible Element auch ein flexibler Abschnitt des Radoms selbst sein, aber auch aus wenigstens einem getrennten Element, beispielsweise einem Band, realisiert sein. Aufgrund der Flexibilität des halternden Elements kann dieses beispielsweise senkrecht zur Verschieberichtung neben eine Gehäusewand des Gehäuseteils geführt werden, wo mithin ein zusätzlicher Stauraum zur Verfügung steht, der ein Überragen vermeidet. Denkbar ist es jedoch auch, insbesondere im Fall eines Bandes, das flexible, führende Element aufrollbar und/oder abrollbar auszugestalten, wobei dann beispielsweise die Bewegungseinrichtung als ein Motor direkt an einer Rolle zum Aufrollen des Elements, insbesondere eines Bandes, ansetzen kann. Durch eine geschickte Ausgestaltung der Führung ist es auch möglich, das Gehäuse dennoch insgesamt geschlossen zu halten, so dass der Radarsensor widerstandsfähig gegen äußere Einflüsse ist, auch wenn es die kleinbauende Ausgestaltung des Radarsensors häufig ermöglichen wird, ihn innerhalb von Hohlräumen, beispielsweise in einem Kraftfahrzeug, einzusetzen.

Eine Weiterbildung in diesem Kontext sieht vor, dass bei einer elastischen Kraft auf das Element in einer Richtung die Bewegungseinrichtung zur Linearbewegung des Radom in Verschieberichtung ausgebildet ist. Das bedeutet, das Radom kann einseitig durch eine elastische Kraft vorbelastet gehalten sein, so dass die Ruhelage beispielsweise einer ersten Modusposition entspricht. Durch einen Aktor, insbesondere einen Motor, der Bewegungseinrichtung kann das Radom aus dieser Ruhelage in die wenigstens eine weitere Modusposition gegen die elastische Kraft gebracht werden. Beispielsweise kann hierfür ein Anschlag und/oder ein Rastmittel vorgesehen werden. Ist eine Verriegelungseinrichtung, beispielsweise ein Rastmittel, für die wenigstens eine weitere Modusposition gegeben, kann ein Rückführen in die der ersten Modusposition entsprechende Ruheposition durch Freigeben der Verriegelungseinrichtung an sich realisiert werden.

Es ist jedoch auch denkbar, dass bei einem beidseitig durch aufrollbare Bänder gehaltenen Radom die Bewegungseinrichtung zum Aufrollen und/oder Abrollen wenigstens eines Bandes ausgebildet ist, so dass in dieser Ausgestaltung keine elastische Kraft benötigt wird, mithin keine längere Zeit vorliegende Vorbelastung des Radoms bzw. der halternden Elemente benötigt wird. Eine derartige Ausgestaltung lässt sich selbstverständlich auch realisieren, wenn das Radom flexible Abschnitte aufweist, die seitlich am Gehäuseteil nach unten geführt werden.

Neben den hier konkret vorgebrachten Beispielen lassen sich selbstverständlich auch andere Möglichkeiten einsetzen, um die Bewegbarkeit der Radaroptikabschnitte und die entsprechende Einstellung von Moduspositionen zu erreichen. Allgemein können die Moduspositionen, falls notwendig, durch Rastmittel oder dergleichen markiert bzw. definiert werden, wobei auch eine Vordefinition bestimmter Stellungen des Motors der Bewegungseinrichtung ausreichend sein kann, um die Modusposition hinreichend genau zu definieren.

Neben dem Radarsensor betrifft die vorliegende Erfindung auch ein Kraftfahrzeug, welches wenigstens einen erfindungsgemäßen Radarsensor aufweist. Sämtliche Ausführungen bezüglich des erfindungsgemäßen Radarsensors lassen sich analog auf das erfindungsgemäße Kraftfahrzeug übertragen, mit welchem mithin die bereits genannten Vorteile erhalten werden können. Der kleinbauend realisierte und unterschiedliche Detektionseigenschaften vom selben Ausgangspunkt ermöglichende Radarsensor lässt sich also besonders vorteilhaft in einem Kraftfahrzeug einsetzen, so dass beispielsweise mit einem einzigen, kleinbauenden Radarsensor Daten aus einem Fernbereich und einem Nahbereich erhalten werden können.

In einer Weiterbildung des Kraftfahrzeugs kann vorgesehen sein, dass es wenigstens ein Steuergerät eines Fahrzeugsystems aufweist, welches zur Ansteuerung der Bewegungseinrichtung zur Einstellung einer Modusposition des Radoms in Abhängigkeit der für eine Funktion benötigten Radardaten des Radarsensors ausgebildet ist. Die Radardaten des Radarsensors werden üblicherweise in einem Steuergerät, das wenigstens einem Fahrzeugsystem zugeordnet ist, verarbeitet, beispielsweise in einem Steuergerät für längsführende Fahrerassistenzsysteme oder dergleichen. In Funktionen, die durch ein derartiges Steuergerät realisiert werden, kann es dabei vorkommen, dass unterschiedliche Radardaten angefordert werden, beispielsweise zu einem ersten Zeitpunkt Radardaten aus einem Nahbereich mit großem Öffnungswinkel, zu einem späteren Zeitpunkt Radardaten aus einem Fernbereich mit einem schmaleren Öffnungswinkel. Hieraus ergibt sich aber, dass eine entsprechende Anforderung im Steuergerät erstellt werden kann und genutzt werden kann, um die Bewegungseinrichtung, gegebenenfalls auch indirekt über eine Steuereinheit des Radarsensors, anzusteuern, so dass das Radom die entsprechende Modusposition einnimmt und der Radarsensor im Folgenden die tatsächlich benötigten Radardaten liefert.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen erfindungsgemäßen Radarsensor mit einem Radom in einer ersten Modusposition,
- Fig. 3: den erfindungsgemäßen Radarsensor der Fig. 2 mit dem Radom in einer zweiten Modusposition, und
- Fig. 4: eine alternative Ausführungsform eines erfindungsgemäßen Radarsensors.

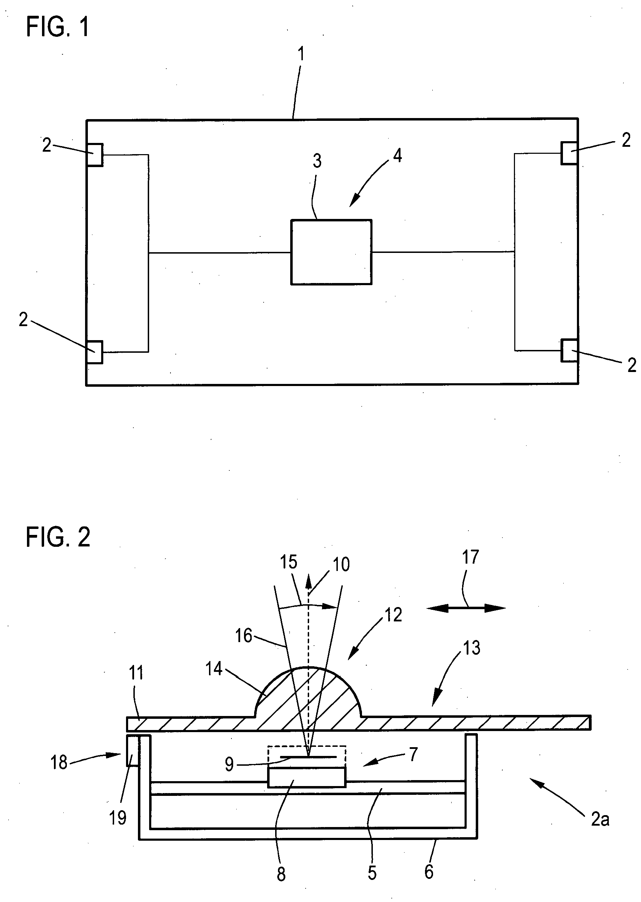

Fig. 1 zeigt eine Prinzipskizze eines erfindungsgemäßen Kraftfahrzeugs 1. Das Kraftfahrzeug 1 weist vorliegend vier erfindungsgemäße Radarsensoren 2 auf, die auf den Bereich vor und hinter dem Kraftfahrzeug 1 gerichtet sind. Die Radardaten der Radarsensoren werden an wenigstens ein Steuergerät 3 des Kraftfahrzeugs 1 weitergeleitet, das wenigstens einem Fahrzeugsystem 4 zugeordnet ist. Das Steuergerät 3 kann abhängig von den Anforderungen einer durch es ausgeführten Funktion bestimmte Detektionseigenschaften von den Radarsensoren 2 anfordern, die wie im Folgenden dargestellt realisiert werden können.

Fig. 2 zeigt genauer den Aufbau eines erfindungsgemäßen Radarsensors 2a in einer ersten Ausführungsform. Kernstück des Radarsensors 2a bildet eine Leiterplatte 5, die vorliegend in einem Gehäuseteil 6 gehaltert ist. Auf der Leiterplatte 5 ist ein Package 7 in CMOS-Technologie angeordnet, in dem ein CMOS-Chip 8 und eine Antennenanordnung 9 realisiert sind. In dem CMOS-Chip 8 sind ein Radar-Transceiver, eine digitale Signalverarbeitungskomponente und eine Steuereinheit realisiert. Das bedeutet, der Radarsensor 2a kann äußerst kleinbauend und hochintegriert realisiert werden.

In Ausstrahlungsrichtung 10 ist das dorthin offene Gehäuseteil 6 durch ein Radom 11 zur Vervollständigung des Gehäuses abgeschlossen. Das Radom 11 besteht aus einem Hochfrequenz-Material, hier Polypropylen, und ist somit für Radarstrahlung durchlässig. Es ist hier massiv und einstückig ausgebildet. Das Radom 11 weist vorliegend einen ersten Radaroptikabschnitt 12 und einen zweiten Radaroptikabschnitt 13 auf. Der Radaroptikabschnitt 12, der vorliegend die Antennenanordnung 9 überdeckend angeordnet ist, weist eine halbkugelförmige Auswölbung 14 auf, die mithin eine gebogene Grenzfläche schafft, so dass die Wirkung einer Linse auf die von der Antennenanordnung 9 ausgesandte Radarstrahlung entsteht. Dies hat hier die Folge, dass eine erhöhte Reichweite der Radarstrahlung gegeben ist, jedoch der Öffnungswinkel 15 des Erfassungsbereichs 16 reduziert ist.

Der Radaroptikabschnitt 13 ist flach ausgebildet, das bedeutet, hier ist keine zusätzliche Linsenwirkung an Übergangsflächen gegeben.

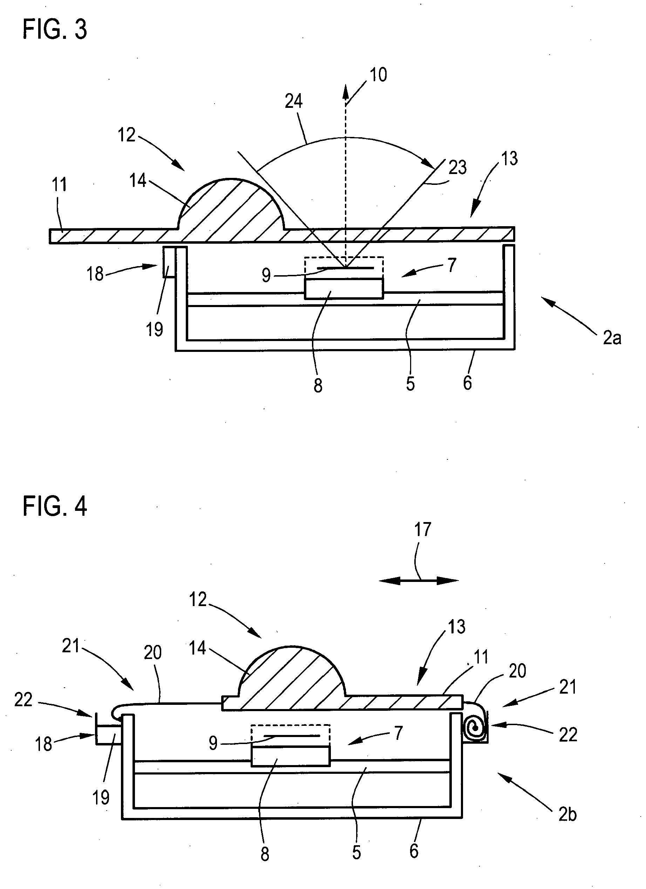

Über eine hier nicht näher gezeigte Führungseinrichtung ist das Radom 11 auf dem Gehäuseteil 6 in der Verschieberichtung 17 verschiebbar, wobei zur Automatisierung dieses Vorgangs eine Bewegungseinrichtung 18, hier mit einem Linearmotor 19, vorgesehen ist, der das Radom 11 in der Verschieberichtung 17 derart verschieben kann, dass entweder der Radaroptikabschnitt 12 in einer ersten Modusposition die Antennenanordnung 9 überdeckt oder der Radarabschnitt 13 in einer zweiten Modusposition die Antennenanordnung 9 überdeckt, wie dies in Fig. 3 gezeigt ist. Dort befindet sich nun der Radaroptikabschnitt 13, der flach ist, in einer die Antennenanordnung 9 überdeckenden Position, so dass der Erfassungsbereich 23 einen größeren Öffnungswinkel 24 aufweist, jedoch die Reichweite der Radarstrahlung kürzer ist.

So lässt sich mithin durch einfaches Verschieben des Radoms 11 eine Mehrzahl von Detektionseigenschaften des Radarsensors 2a erreichen, ohne dass an dem Radar-Frontend, das durch das Package 7 gebildet wird, eine Veränderung notwendig wäre.

Fig. 4 zeigt schließlich eine zweite Ausführungsform eines erfindungsgemäßen Radarsensors 2b, bei dem der Einfachheit halber gleiche Komponenten mit den gleichen Bezugszeichen versehen sind. Im hier dargestellten Beispiel ist das Radom 11 kürzer als die Länge des Gehäuseteils 6 in Verschieberichtung ausgestaltet und wird in der wiederum nicht näher gezeigten Führungseinrichtung durch zwei Bänder 20 als Elemente 21 gehalten. Die Bänder 20 sind flexibel und können in entsprechenden Rollvorrichtungen 22 auf- und abgerollt werden. Dies geschieht wiederum betrieben durch einen Motor 19, wobei verschiedene konkrete Ausgestaltungen existieren, um beide Moduspositionen jeweils ausgehend von der anderen einnehmen zu können, beispielsweise die Platzierung eines Motors 19 zu beiden Seiten, das Vorsehen einer elastischen Kraft auf der dem Motor 19 abgewandten Seite, die zum Aufrollen tendiert oder eine Ausbildung der Führungseinrichtungen derart, dass der Betrieb eines Motors 19 auf einer Seite ausreichend ist.

Während in den hier dargelegten Ausführungsbeispielen die Moduspositionen durch bestimmte Stellungen des Motors 19 bestimmt werden, ist es selbstverständlich auch, gegebenenfalls sogar zusätzlich, möglich, Rastmittel, Verriegelungseinrichtungen und dergleichen vorzusehen, um die Modusposition zu definieren. Auch sind selbstverständlich andere Realisierungen der Bewegbarkeit des Radoms 11 denkbar, beispielsweise ein Radom 11 mit seitlichen, flexiblen Abschnitten, die dann seitlich entlang der Wand des Gehäuseteils 6 nach unten geführt werden und dergleichen.

## Patentansprüche

1. Radarsensor (2, 2a, 2b), aufweisend wenigstens einen Radar-Transceiver, eine Antennenanordnung (9), ein Radom (11) und eine Bewegungseinrichtung (18),
**dadurch gekennzeichnet,**
**dass** das insbesondere einstückige Radom (11) wenigstens zwei unterschiedlich wirkende Radaroptikabschnitte (12, 13) aufweist und die Bewegungseinrichtung (18) zur Bewegung des Radoms (11) in den einzelnen Radaroptikabschnitten (12, 13) zugeordnete Moduspositionen, in denen die Antennenanordnung (9) durch den jeweiligen Radaroptikabschnitt (12, 13) ausstrahlt, vorgesehen ist, wobei der wenigstens eine Radar-Transceiver als ein auf einer Leiterplatte (5) angeordneter CMOS-Chip (8) und die Antennenanordnung (9) in einem Package (7) mit dem CMOS-Chip (8) realisiert ist.

2. Radarsensor nach Anspruch 1,
**dadurch gekennzeichnet,**
**dass** durch den CMOS-Chip (8) auch eine digitale Signalverarbeitungskomponente und/oder eine Steuereinheit des Radarsensors (2, 2a, 2b) realisiert ist.

3. Radarsensor nach Anspruch 1 oder 2,
**dadurch gekennzeichnet,**
**dass** das Radom (11) wenigstens einen flachen Radaroptikabschnitt (13) und wenigstens einen nach außen ausgewölbten, eine Linsenwirkung auf die Radarstrahlung ausübenden Radaroptikabschnitt (12) aufweist.

4. Radarsensor nach einem der vorangehenden Ansprüche,
**dadurch gekennzeichnet,**
**dass** das Radom (11) aus einem Hochfrequenzmaterial, insbesondere umfassend Polypropylen, besteht und/oder in einem Gussverfahren hergestellt ist.

5. Radarsensor nach einem der vorangehenden Ansprüche,
**dadurch gekennzeichnet,**
**dass** die Leiterplatte (5) in einem in Ausstrahlungsrichtung (10) offenen Gehäuseteil (6) gehaltert ist, wobei das Radom (11) in Ausstrahlungsrichtung auf dem Gehäuseteil (6) verschiebbar und/oder rotierbar geführt ist, und/oder die Bewegungseinrichtung (18) einen Motor (19), insbesondere einen Linearmotor, aufweist.

6. Radarsensor nach Anspruch 5,
**dadurch gekennzeichnet,**
**dass** das Radom (11) in Verschieberichtung (17) kürzer als das Gehäuseteil (6) ausgebildet ist oder einen kürzer als das Gehäuseteil (6) ausgeführten starren Anteil aufweist, und seitlich durch wenigstens ein flexibles, geführtes Element (21) gehaltert ist.

7. Radarsensor nach Anspruch 6,
**dadurch gekennzeichnet,**
**dass** bei Vorbelasten des Elements (21) mit einer elastischen Kraft in einer Richtung die Bewegungseinrichtung (18) zur Linearbewegung des Radoms (11) in Verschieberichtung (17) ausgebildet ist und/oder bei einem beidseitig durch aufrollbare Bänder (20) gehaltenen Radom (11) die Bewegungseinrichtung (18) zum Aufrollen und/oder Abrollen wenigstens eines Bandes (20) ausgebildet ist.

8. Kraftfahrzeug (1), umfassend wenigstens einen Radarsensor (2, 2a, 2b) nach einem der vorangehenden Ansprüche.

9. Kraftfahrzeug nach Anspruch 8,
**dadurch gekennzeichnet,**
**dass** es wenigstens ein Steuergerät (3) eines Fahrzeugsystems (4) aufweist, welches zur Ansteuerung der Bewegungseinrichtung (18) zur Einstellung einer Modusposition des Radoms (11) in Abhängigkeit der für eine Funktion benötigten Radardaten des Radarsensors (2, 2a, 2b) ausgebildet ist.

## Claims

1. Radar sensor (2, 2a, 2b), having at least one radar transceiver, an antenna arrangement (9), a radome (11) and a moving device (18),
**characterised in**
**that** the in particular integral radome (11) has at least two differently operating radar optic sections (12, 13) and the moving device (18) is provided to move the radome (11) into mode positions, assigned to the individual radar optic sections (12, 13), in which the antenna arrangement (9) emits through the respective radar optic section (12, 13), wherein the at least one radar transceiver is realised as a CMOS-chip (8) disposed on a circuit board (5) and the antenna arrangement (9) is realised in a package (7) with the CMOS-chip (8).

2. Radar sensor according to claim 1,
**characterised in**
**that** by the CMOS-chip (8) is realised also a digital signal processing component and/or a control unit of the radar sensor (2, 2a, 2b).

3. Radar sensor r according to claim 1 or 2,
**characterised in**
**that** the radome (11) has at least one planar radar optic section (13) and at least one radar optic section (12) domed to the outside and exerting a lens effect on the radar radiation.

4. Radar sensor according to any of the preceding claims,
**characterised in**
**that** the radome (11) is made from a high-frequency material, in particular including polypropylene, and/or is manufactured in a casting process.

5. Radar sensor according to any of the preceding claims,
**characterised in**
**that** the circuit board (5) is held in a housing part (6) open in emitting direction (10), wherein the radome (11) is guided slidably and/or rotatably in emission direction on the housing part (6), and/or the moving device (18) has a motor (19), in particular a linear motor.

6. Radar sensor according to claim 5,
**characterised in**
**that** the radome (11) in sliding direction (17) is formed shorter than the housing part (6) or has a rigid part designed shorter than the housing part (6), and is held laterally by at least one flexible guided element (21).

7. Radar sensor according to claim 6,
**characterised in**
**that** in the case of a preloading of the element (21) with an elastic force in one direction the moving device (18) is configured for the linear movement of the radome (11) in sliding direction (17) and/or in the case of a radome (11) being held on both sides by rollable tapes (20) the moving device (18) is configured for rolling up and/or unrolling at least one tape (20).

8. Motor vehicle (1) including at least one radar sensor (2, 2a, 2b) according to any of the preceding claims.

9. Motor vehicle according to claim 8,
**characterised in**
**that** it has at least one control device (3) of a motor vehicle system (4) which is configured to control the moving device (18) to set a mode position of the radome (11) depending on the radar data, required for a function, of the radar sensor (2, 2a, 2b).

## Revendications

1. Capteur radar (2, 2a, 2b), présentant au moins un émetteur-récepteur de radar, un dispositif d'antenne (9), un radôme (11) et un dispositif de déplacement (18),
**caractérisé en ce**
**que** le radôme (11) en particulier d'une seule pièce présente au moins deux tronçons d'optique de radar (12, 13) à effet différent et le dispositif de déplacement (18) est destiné à déplacer le radôme (11) dans les positions de mode associées aux différents tronçons d'optique de radar (12, 13) dans lesquels le dispositif d'antenne (9) émet par le tronçon d'optique de radar (12, 13) respectif, dans lequel l'au moins un émetteur-récepteur de radar est réalisé sous la forme d'une puce à semi-conducteur à oxyde de métal complémentaire (8) disposée sur une plaque de circuits imprimés (5) et le dispositif d'antenne (9) est réalisé dans un boîtier (7) avec la puce à semi-conducteur à oxyde de métal complémentaire (8).

2. Capteur radar selon la revendication 1,
**caractérisé en ce**
**qu'**un composant de traitement de signaux numériques et/ou une unité de commande du capteur radar (2, 2a, 2b) sont également réalisés par la puce à semi-conducteur à oxyde de métal complémentaire (8).

3. Capteur radar selon la revendication 1 ou 2,
**caractérisé en ce**
**que** le radôme (11) présente au moins un tronçon d'optique de radar (13) plat et au moins un tronçon d'optique de radar (12) bombé vers l'extérieur, exerçant une action de lentille sur le rayonnement radar.

4. Capteur radar selon l'une quelconque des revendications précédentes,
**caractérisé en ce**
**que** le radôme (11) est constitué d'un matériau haute fréquence, comprenant en particulier du polypropylène, et/ou fabriqué au cours d'un procédé de coulée.

5. Capteur radar selon l'une quelconque des revendications précédentes,
**caractérisé en ce**
**que** la plaque de circuits imprimés (5) est retenue dans une partie de logement (6) ouverte dans une direction de rayonnement (10), dans lequel le radôme (11) est guidée en coulissement et/ou en rotation dans la direction d'émission sur la partie de logement (6), et/ou le dispositif de déplacement (18) présente un moteur (19), en particulier un moteur linéaire.

6. Capteur radar selon la revendication 5,
**caractérisé en ce**
**que** le radôme (11) dans la direction de coulissement (17) est réalisé de manière plus courte que la partie de logement (6) ou présente une portion rigide réalisée de manière plus courte que la partie de logement (6), et est retenu latéralement par au moins un élément (21) flexible guidé.

7. Capteur radar selon la revendication 6,
**caractérisé en ce**
**que** lorsque l'élément (21) est précontraint avec une force élastique dans une direction, le dispositif de déplacement (18) est conçu pour déplacer linéairement le radôme (11) dans la direction de coulissement (17) et/ou lorsque le radôme (11) est retenu de part et d'autre par des bandes (20) pouvant être enroulées, le dispositif de déplacement (18) est conçu pour enrouler et/ou dérouler au moins une bande (20).

8. Véhicule automobile (1), comprenant au moins un capteur radar (2, 2a, 2b) selon l'une quelconque des revendications précédentes.

9. Véhicule automobile selon la revendication 8,
**caractérisé en ce**
**qu'**il présente au moins un appareil de commande (3) d'un système de véhicule (4), lequel est conçu pour commander le dispositif de déplacement (18) pour régler une position de mode du radôme (11) en fonction des données de radar du capteur radar (2, 2a, 2b) nécessaires à un fonctionnement.
